# EUROPEAN PATENT APPLICATION

(11) **EP 4 357 226 A1**
(43) Date of publication of application: **24.04.2024**
(21) Application number: 23204052.7
(22) Date of filing: 17.10.2023
(51) Int. Cl.: B62H 3/04, B62H 3/08, E04H 6/00

(54) **BICYCLE PARKING SYSTEM**

(30) Priority: 17.10.2022 NL 2033332
(71) Applicant: Fietshangar B.V., 5263 GG Vught (NL)
(72) Inventor: DUIJNSTEE, Eduard Jozef Marie, 5263 GG VUGHT (NL); RYPMA, Matthijs Jurre, 5263 GG VUGHT (NL); WAGEMAKERS, Albert Theodoor Vincent, 5263 GG VUGHT (NL)
(74) Representative: van Trier, Norbertus Henricus Gerardus

(57) **Abstract**

The invention relates to a bicycle parking system for enabling a user to park its bicycle, comprising a bicycle parking support that defines a bicycle parking spot, wherein the bicycle parking support comprises: a wheel catcher configured for catching at least a part of the wheel inserted therein in an insert direction, wherein the wheel catcher comprises a front wheel clamp for clamping the leading part of an inserted wheel, a bottom wheel clamp for clamping the bottom part of the inserted wheel, and a back wheel clamp for clamping a trailing part of the inserted wheel clamp, wherein the front wheel clamp and the bottom wheel clamp are rotatable about a horizontal rotational axis, which extends parallel to the wheel rotation axis of the inserted wheel, between a receiving position, in which a wheel may be inserted into the wheel catcher, and a parking position, in which the wheel is clamped between the front wheel clamp, the bottom wheel clamp and the back wheel clamp, and the back wheel clamp and the rotational axis are fixed, and wherein the bottom wheel clamp, the back wheel clamp and the rotational axis are located at a level below the wheel rotation axis of the inserted wheel, and wherein the rotational axis is located outside the outer circumference of the inserted wheel when seen from aside.

## Description

### BACKGROUND

The invention relates to a bicycle parking system for enabling a user to park its bicycle, comprising a bicycle parking support that defines a bicycle parking spot.

Such a bicycle parking system is well-known, wherein the known bicycle parking system is also known as a bicycle rack. The bicycle rack comprises a number of front wheel supporting brackets that are arranged next to each other such that a number of bicycles may be parked next and parallel to each other. The front wheel supporting brackets are alternately arranged at a high or low position.

### SUMMARY OF THE INVENTION

Nowadays, more and more people use a bicycle to get around their home town and/or to travel to work at least partially. As a result, the amount of bicycles, for example, present within a city center increases dramatically. An increasing amount of bicycles leads to an increasing amount of varieties of bicycles, wherein the varieties may be related, but not limited, to the width of the bicycle tires, the diameter of the bicycle tires, the width of the handlebars of the bicycle and the shape of the handlebars of the bicycle. Despite all varieties of bicycles, it is still desired to park the bicycles in a bicycle parking system, for example, to protect the bicycles against environmental influences when not used, or to prevent the bicycles from being stolen. A disadvantage of the known bicycle parking system is that the front wheel supports are configured for receiving bicycle tires with a predetermined width and with a predetermined diameter. As a result, a number of bicycles cannot be parked within the known bicycle parking system and are parked somewhere on the street.

Additionally, the known bicycle parking system also results in incorrect or double parking of bicycles, or inefficient use, which may lead to damage to bicycles parked within the known bicycle parking system.

It is an object of the present invention to ameliorate or to eliminate one or more disadvantages of the known prior art, to provide an improved bicycle parking system or to at least provide an alternative bicycle parking system.

According to a first aspect, the invention provides a bicycle parking system for enabling a user to park its bicycle, comprising a bicycle parking support that defines a bicycle parking spot, wherein the bicycle parking support comprises:
a wheel catcher configured for catching at least a part of the wheel inserted therein in an insert direction,
wherein the wheel catcher comprises a front wheel clamp for clamping the leading part of an inserted wheel, a bottom wheel clamp for clamping the bottom part of the inserted wheel, and a back wheel clamp for clamping a trailing part of the inserted wheel,
wherein the front wheel clamp and the bottom wheel clamp are rotatable about a horizontal rotational axis, which extends parallel to the wheel rotation axis of the inserted wheel, between a receiving position, in which a wheel may be inserted into the wheel catcher, and a parking position, in which the wheel is clamped between the front wheel clamp, the bottom wheel clamp and the back wheel clamp, and the back wheel clamp and the rotational axis are fixed, and
wherein the bottom wheel clamp, the back wheel clamp and the rotational axis are located at a level below the wheel rotation axis of the inserted wheel, and wherein the rotational axis is located outside the outer circumference of the inserted wheel when seen from aside.

When a person wants to park a bicycle in the bicycle parking system, the person inserts a wheel of the bicycle, which may be the front wheel or the rear wheel of the bicycle, into the wheel catcher. While inserting the wheel into the wheel catcher, the wheel is received within the bottom wheel clamp from above due to which the wheel catcher may be rotated from the receiving position into the parking position. Alternatively, the inserted wheel may contact the front wheel clamp firstly due to which the wheel catcher also may be rotated from the receiving position into the parking position. As a result of the rotational movement of the wheel catcher, the front wheel clamp and the bottom wheel clamp are forced against the front wheel, thereby clamping the wheel between the front wheel clamp, the bottom wheel clamp and the back wheel clamp. When a wheel with a smaller diameter is parked in the bicycle parking support, the wheel with the smaller diameter also enters the wheel catcher and is also received by the bottom wheel clamp from above, or contacts the front wheel clamp firstly. Therefore, the front wheel clamp and the bottom wheel clamp both are again rotated around the rotational axis until forced against and clamping the wheel with the smaller diameter. Thus, the smaller the diameter of the wheel, the larger the rotational movement of the wheel catcher and thereby the front wheel clamp and the bottom wheel clamp thereof, and *vice versa.* As the wheel catcher is rotated until the front wheel clamp and the bottom wheel clamp are forced against the wheel, the bicycle parking system is enabled to stall bicycles with different wheel diameters. An advantage of the invention is, thus, that a broad range of different wheel diameters may be parked within the bicycle parking system, wherein both a front and rear wheel of a bicycle may be inserted into the wheel catcher.

Since a broad range of different wheel diameters may be inserted into the bicycle parking system, correct use of the bicycle parking system may be encouraged. This may be advantageous, since the risk of damage to bicycles parked within the bicycle parking system thereby may be reduced. The inventors have surprisingly found that due to the location of the rotational axis outside the outer circumference of the inserted wheel, *i.e.* the rotational axis does not overlap with the inserted wheel when seen from aside, a broader range of different wheel diameters may be inserted into and/or may be removed from the bicycle parking system relatively easily in comparison to a bicycle parking system according to the prior art.

A further advantage of the bicycle parking system according to the invention is that it may be used in a high-low configuration. This may be made possible by clamping the wheel from the front and from below. This is advantageous, as it may increase the capacity of the bicycle parking system.

Additionally, the wheel of the bicycle parked within the bicycle parking system according to the invention is clamped at three different points, which may provide a reliable clamping of the wheel. This is advantageous, as it may prevent the bicycle from falling out of the bicycle parking system unintentionally.

In an embodiment, the bicycle parking support comprises a drive gutter configured for receiving at least a wheel of a bicycle and having a first supporting end and a second supporting end, opposite to the first supporting end in the longitudinal direction of the drive gutter,
wherein the drive gutter has a wheel parking opening in the bottom wall thereof for receiving at least a part of the wheel, which wheel parking opening extends from the second supporting end towards the first supporting end and ends at an end edge of the bottom wall, which end edge defines the back wheel clamp, and
wherein the wheel catcher is arranged at the second supporting end and the bottom wheel clamp and the rotational axis are located below the drive gutter. Preferably, the bottom wheel clamp is located below the wheel parking opening. During use, multiple bicycle parking supports may be arranged next to each other, and the drive gutter of each of the bicycle parking supports may be used for guiding the wheel of the bicycle to be parked towards the wheel catcher. As the wheel is guided towards the wheel catcher, it may be easier to insert the rear wheel of the bicycle to be parked into the wheel catcher. The bicycle parking system according to this embodiment, therefore, enables and/or promotes alternately inserting the front wheel and the rear wheel of bicycles into the wheel catchers of the bicycle parking supports. This is advantageous as it allows a more efficient use of the bicycle parking system.

In an embodiment, the front wheel clamp and the bottom wheel clamp are fixed with respect to each other. In the context of the present application, this has to be understood as that the distance between the front wheel clamp and the bottom wheel clamp is always the same. In a further embodiment thereof, the front wheel clamp, the bottom wheel clamp and the rotational axis together define a triangle, when seen from the side. According to this embodiment, rotational movement of the bottom wheel clamp may result in substantially the same rotational movement of the front wheel clamp. This is advantageous, as rotation of the wheel catcher may be achieved in a relatively easy manner.

Additionally, due to the triangular arrangement of the front wheel clamp, the bottom wheel clamp and the rotational axis, the clamping force applied to the inserted wheel may be enlarged in an advantageous manner, in comparison to the prior art, due to the increased arm defined by the distance between the front wheel clamp and the rotation axis.

In an embodiment, when the bicycle parking support comprises a drive gutter configured for receiving at least a wheel of a bicycle and having a first supporting end and a second supporting end, opposite to the first supporting end in the longitudinal direction of the drive gutter,
wherein the drive gutter has a wheel parking opening in the bottom wall thereof for receiving at least a part of the wheel, which wheel parking opening extends from the second supporting end towards the first supporting end and ends at an end edge of the bottom wall, which end edge defines the back wheel clamp, and
wherein the wheel catcher is arranged at the second supporting end and the bottom wheel clamp and the rotational axis are located below the drive gutter, the first support end is located at a first level and the second support end is located at a second level, wherein the second level is higher than the first level.

In an embodiment, the front wheel clamp, the bottom wheel clamp and/or the back wheel clamp are substantially V-shaped. According to this embodiment, the V-shaped front wheel clamp, the V-shaped bottom wheel clamp and the V-shaped back wheel clamp are formed by means of a V-shaped opening, for example, in a plate-shaped element. The V-shape has as a property that the further the wheel is inserted in into the front wheel clamp, the bottom wheel clamp and/or the back wheel clamp, the further the distance between the side edges defining the V-shape becomes. This may be understood as the smaller the width of the tire on the wheel, the further the tire is enabled to move into the front wheel clamp, the bottom wheel clamp and/or the back wheel clamp. An advantage of the V-shaped front wheel clamp, bottom wheel clamp and/or back wheel clamp is the ability to clamp a broad range of different tire widths.

In an embodiment, the wheel catcher comprises a wheel receiving opening configured for receiving at least a part of the wheel and extending between the front wheel clamp and the bottom wheel clamp. In an embodiment thereof, the drive gutter, at the second supporting end thereof, projects into the wheel catcher via the wheel receiving opening. According to this embodiment, the wheel of a bicycle to be parked may enter the wheel catcher at least partially. Therefore, the wheel is received within the wheel catcher partially, while being clamped by among others the front wheel clamp and the bottom wheel clamp. The wheel receiving opening, for example, may prevent the front wheel of a parked bicycle from rotating around its steering axis while being parked. This embodiment, therefore, may provide a secure parking of a bicycle.

In an embodiment, the bicycle parking system comprises a mount arranged at the wheel catcher and configured the bicycle parking support to another component of the bicycle parking system. In an embodiment thereof, the mount is arranged at or near the second supporting end of the drive gutter and configured for mounting the bicycle parking support to another component of the bicycle parking system. In an embodiment thereof, the wheel catcher is arranged at the mount in such manner that the wheel catcher is rotatable about the rotational axis.

In an embodiment, the bicycle parking system comprises a resilient part, such as a spring, arranged at or near the wheel catcher, wherein the resilient part is configured for moving the wheel catcher into the receiving position when the wheel is removed from the wheel catcher. An advantage of this embodiment is that the wheel catcher may always be positioned in the receiving position, when no bicycle is parked, such that a person may always park a bicycle directly at the bicycle parking spot defined by the bicycle parking support.

In an embodiment, the resilient part is provided between the wheel catcher and the mount. According to this embodiment, the resilient part may be used for connecting the wheel catcher to the mount, and for moving the wheel catcher into the receiving position when a parked bicycle is removed. This is advantageous, as the resilient part may keep the bicycle parking system constructively relatively simple.

In an embodiment, the bicycle parking system comprises a movement limiter configured for limiting the rotational movement of the wheel catcher between the receiving position and the parking position. In an embodiment thereof, the movement limiter is provided at the wheel catcher and the mount. The movement limiter advantageously prevents the wheel catcher from moving into a position in which no bicycle may be parked at the bicycle parking support, or in which a parked bicycle may not be removed from the bicycle parking support.

In an embodiment, the bicycle parking system comprises a housing having a parking space defined therein in which the bicycle park support is arranged, wherein the housing has a door portion for providing access to the parking space. Preferably, the housing has a lock for locking or opening the door portion to control access to the parking space within the housing. According to this embodiment, a bicycle owner may be enabled to park a bicycle in a parking space such that the bicycle may be parked indoor and/or in a dry environment. The housing, thus, may protect the bicycle against environmental influences. Additionally, due to the lock for locking or opening the door portion, access to the parking space may be restricted to persons who actually park a bicycle therein. It, therefore, is more difficult for thieves to access and steal a bicycle parked in the bicycle parking system. An advantage of this embodiment is that a bicycle may be parked in a safe way while being protected against environmental influences.

In an embodiment, a supporting beam is horizontally arranged within the housing, wherein the bicycle parking support, in particular the drive gutter at the second supporting end thereof is arranged at the supporting beam. In an embodiment thereof, the bicycle parking support is releasable arranged at the supporting beam such that the position of the bicycle parking support within the housing is adjustable. The bicycle parking system may comprise two or more bicycle parking supports, such that multiple bicycles may be parked therein. As the width of bicycles, in particular the width of the handle bars thereof, varies, the distance between adjacent bicycle parking supports may be too small or too large. According to this embodiment, the bicycle parking support may be released from the supporting beam, to which it is arranged during use, in order to adjust the distance between adjacent bicycle parking supports. An advantage of this embodiment is that the distribution of two or more bicycle parking supports may be easily adjusted.

In an embodiment, the bicycle parking system comprises two or more bicycle parking supports arranged next to each other and wherein a top supporting beam and a lower supporting beam are horizontally arranged within the housing, wherein one of the two or more bicycle parking supports is arranged at the top supporting beam, and the other one of the two or more bicycle parking supports is arranged at the lower supporting beam. According to this embodiment, the two or more bicycle parking supports are alternately arranged in a high position and a low position. By alternately arranging the bicycle parking supports in a high position and a low position, the mutual distance between adjacent bicycle parking supports may be relatively small as the handle bars of adjacent bicycles are arranged above each other. This is advantageous, since it enables a more efficient use of the bicycle parking system thereby advantageously resulting in an increased bicycle storage capacity.

In an embodiment, when the bicycle parking support comprises a drive gutter configured for receiving at least a wheel of a bicycle and having a first supporting end and a second supporting end, opposite to the first supporting end in the longitudinal direction of the drive gutter,
wherein the drive gutter has a wheel parking opening in the bottom wall thereof for receiving at least a part of the wheel, which wheel parking opening extends from the second supporting end towards the first supporting end and ends at an end edge of the bottom wall, which end edge defines the back wheel clamp, and
wherein the wheel catcher is arranged at the second supporting end and the bottom wheel clamp and the rotational axis are located below the drive gutter, the bicycle parking system comprises a gutter adapter arranged releasable at the drive gutter, wherein the gutter adapter is moveable with respect to the drive gutter in order to adjust the dimensions of the wheel parking opening, preferably the dimension of the wheel parking opening in the longitudinal direction of the drive gutter.

In an embodiment, the bicycle parking support is configured to be stacked onto another bicycle parking support. Because of the bicycle parking support being configured to be stacked onto a similar bicycle parking support, multiple bicycle parking supports may be stacked onto each other during transport such that the bicycle parking supports may be transported in an efficient manner.

In an embodiment, the wheel catcher is configured to be moved from the receiving position into the parking position by a wheel being inserted into the wheel catcher in an insert direction substantially parallel to the longitudinal direction of the drive gutter.

In an embodiment, the back wheel clamp and the rotational axis are fixed with respect to each other.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic view of a bicycle parking system with a number of bicycle parking supports according to an embodiment of the invention;
Figures 2A and 2B shows an isometric view and a side view, respectively, of a bicycle parking support of figure 1;
Figure 3 shows a side view of the bicycle parking support of figure 2 with a wheel inserted therein;
Figure 4 shows an alternative embodiment of the bicycle parking support of figure 2;
Figure 5 shows an alternative embodiment of the bicycle parking system of figure 1; and
Figure 6 shows a side view of bicycle parking system of figure 5.

### DETAILED DESCRIPTION OF THE INVENTION

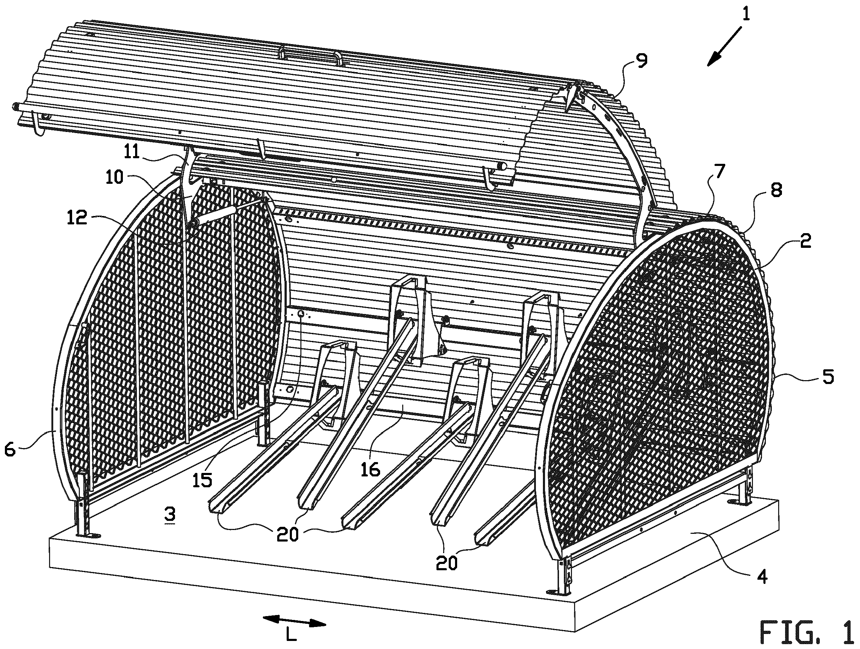

A schematic overview of a bicycle parking system 1 according to an embodiment of the invention is shown in figure 1. The bicycle parking system 1, for example, may be placed in the center of a city in order to allow residents to park their bicycles in a safe manner. For example, the bicycle parking system 1 may be dimensioned such that it may be placed onto a car parking spot. By placing the bicycle parking system 1 onto a parking spot, it does not form any obstruction in the street where it is located.

The bicycle parking system 1 comprising a housing 2 that defines a bicycle parking space 3 into which one or more bicycles may be parked, and that is placed onto a supporting plate 4. Alternatively, the housing 2 may be placed onto a ground frame that may be inserted into the ground, or the housing 2 may be directly connected to the paving stones of the tarmac. As shown in figure 1, the housing 2 is provided with a first side wall 5 and a second side wall 6, opposite to the first side wall 5 in the longitudinal direction L of the housing 2. Each of the first and second side walls 5, 6 has a semi-egg shape, such that one end of the respective side wall 5, 6 is higher that the opposite end thereof. The bicycle parking space 3 between the first and second side walls 5, 6 is roofed by a roofing wall 7. The roofing wall 7 comprises a stationary roofing portion 8 and a door portion 9 that is moveable arranged at the stationary roofing portion 8 between an open position, as shown in figure 1, and a closed position, in which the bicycle parking space 3 is closed off.

The door portion 9 is connected to the stationary roofing portion 8 such that the door portion 9 may be moved, in particular hinged, in an upwards direction with respect to the stationary roofing portion 8, thereby moving the door portion 9 into the open position. In order to allow the door portion 9 to hinge upwards, a hinging mechanism 10 is provided between the station roofing portion 8 and the door portion 9. The hinging mechanism 10 is provided with a Y-shaped arm 11, of which one leg is pivotable connected to the stationary roofing portion 8, one leg is connected to the door portion 9, and one leg is connected to a gas spring 12 that extends between the Y-shaped arm 11 and the stationary roofing portion 8.

Although not shown, the door portion 9 may be provided with a lock for locking the door portion 9 in the closed position, such that all bicycles parked within the bicycle parking system 1, for example, are not accessible by thieves. The lock may be a conventional lock that might be opened by means of a key, but also may be a lock that, for example, might be opened by means of a software application installed on a smartphone of a user, for example, via a Bluetooth^{®} connection.

As shown in figure 1, the stationary roofing portion 8 is provided with a top supporting beam 15 and a lower supporting beam 16 that are arranged parallel to each other and to the longitudinal direction L of the bicycle parking system 1. Each of the top supporting beam 15 and the lower supporting beam 16 extends over substantially the whole width of the bicycle parking system 1. Although not shown, each of the top supporting beam 15 and the lower supporting beam 16, in particular at the upper face thereof, is provided with a plurality of installation slots evenly distributed in the longitudinal direction of the respective supporting beam 15.

The bicycle parking system 1 is provided with a number of bicycle parking supports 20 that are arranged parallel to each other, and where each bicycle parking support defines a bicycle parking spot. As shown in figure 1, the bicycle parking supports 20 are arranged in a high-low configuration, which has to be understood as that the bicycle parking supports 20 are alternating between a low orientation, such as the bicycle parking support 20 leftmost in figure 1, and high orientation, such as the bicycle parking support 20 second from left in figure 1.

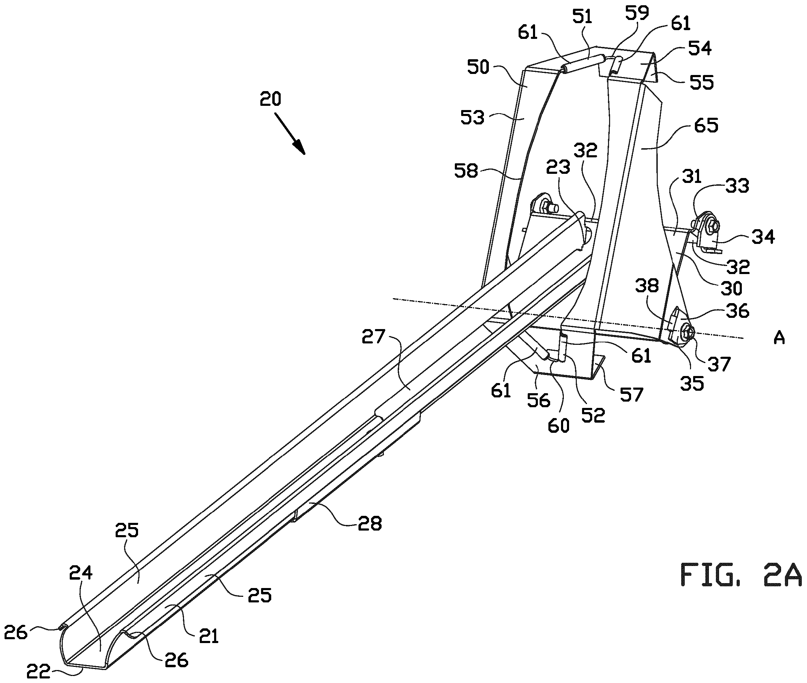

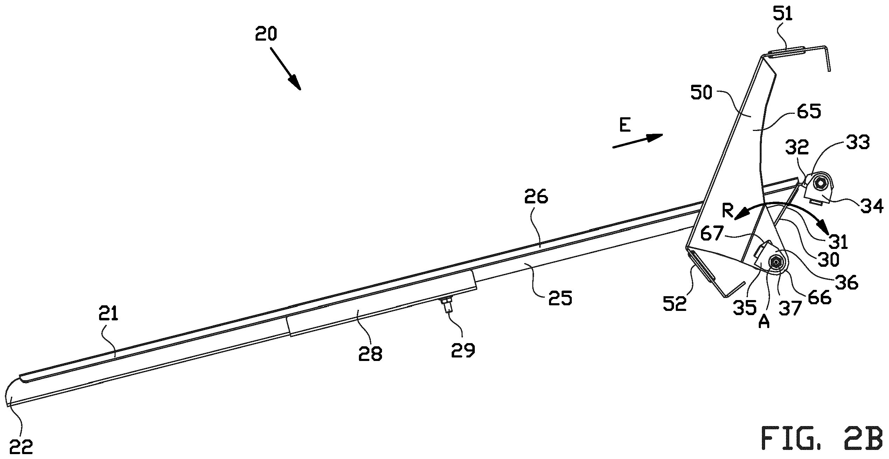

A bicycle parking support 20 is shown in more detail in figures 2A and 2B. The bicycle parking support 20 comprises a drive-up gutter 21 configured for inserting at least a wheel of a bicycle to be parked at the bicycle parking support 20. The drive-up gutter 21 comprises a first supporting end 22 configured for abutting on the supporting plate 4, and a second supporting end 23, opposite to the first supporting end 22 in the longitudinal direction of the drive-up gutter 21. The drive-up gutter 21 is substantially U-shaped and has a bottom wall 24 and two upstanding side walls 25. Each of the upstanding side walls 25, at the end facing away from the bottom wall 24, is provided with a deflecting edge 26 that extends outwardly from the respective side wall 25.

The drive-up gutter 21 includes a wheel parking opening 27 extending from the second supporting end 23 towards the first supporting end 22 over a predetermined distance. The wheel parking opening 27 is configured for receiving at least a part of a wheel of a bicycle to be parked, and is dimensioned such that bicycles ranging from 20 inch to 28 inch may be received therein. During use, a wheel may be inserted into the drive-up gutter 21 by driving the wheel up and into the drive-up gutter 21 until the wheel is received in the wheel parking opening 27. The end edge of the bottom wall 24 facing towards the wheel parking opening 27 may be substantially V-shaped, when seen from above, in order to clamp a wheel at the end edge, thereby forming a back wheel clamp.

As shown, an extension adapter 28 is provided at the outer surface of the drive-up gutter 21, which extension adapter 28 is also substantially U-shaped such that is substantially corresponds to the drive-up gutter 21. The extension adapted 28 is mounted to the drive-up gutter, in this example, by means of a nut-bolt joint 29. The extension adapter 28 may be used for reducing the dimensions of the wheel parking opening 27, in particular the dimension extending in the longitudinal direction of the drive-up gutter 21, such that bicycle wheels with a diameter smaller than 22 inch may be received within the wheel parking opening 27.

At the second support end 23, the drive-up gutter 21 is connected to a mount 30 for mounting the bicycle parking support 20 to the top supporting beam 15 or the lower supporting beam 16. The mount 30 includes a mounting plate 31 that is connected to the drive-up gutter 21 at the upper side thereof, which mounting plate 31 extends from the second support end 23 downwards and towards the first support end 22 such that the mounting plate 31 is inclined with respect to the drive-up gutter 21. At the upper edge, the mounting plate 31 is provided with an abutting edge 32 that is configured for abutting against the upper face of one of the top supporting beam 15 and the lower supporting beam 16. The abutting edge 32, at the opposite side edges thereof, includes mounting projections 33 to which L-shaped mounting pieces 34 may be connected in order to mount the drive-up gutter 21 to one of the top supporting beam 15 and the lower supporting beam 16, wherein the L-shaped mounting pieces 34 are configured to be inserted partially into the installation slots of the respective supporting beam 15, 16.

The mounting plate 31 is provided with further mounting projections 35 at the side edges and near the bottom edge thereof, which further mounting projections 35 extend in a direction away from the drive-up gutter 21. At the further mounting projections 35, clamping pieces 36 are provided which are connected to the further mounting projections 35 by a nut-bolt connection 37. Although not shown, a rotational bus may be provided between the further mounting projection 35 and the corresponding clamping piece 36 at each side of the mounting plate 31 and around a part of the bolt extending therebetween, wherein the rotational busses provide a fixed rotational connection point. Each of the clamping pieces 36 has a hooking part 38 that extends to the other one of the clamping pieces 36 and that is received within a not shown receiving opening defined within the merger between the mounting plate 31 and the further mounting projections 35. The nut-bolt connections 38, together with the rotational busses, on both sides of the mounting plate 31 together define a rotational axis A that is substantially transverse to the longitudinal direction of the drive-up gutter 21. As shown in figures 2A and 2B, the rotational axis A is located at a position below the drive-up gutter 21.

The bicycle parking support 20 further comprises a wheel catcher 50, arranged in front of the mount 30, that is configured for catching and holding a wheel, which may be a front wheel or a rear wheel, of a bicycle to be parked. The wheel catcher 50 is arranged at the mounting plate 31 in a rotatable manner, such that the wheel catcher 50 is rotatable about the rotational axis A. The wheel catcher 50 is provided with a front wheel clamp 51, in particular a V-shaped wheel clamp, which is arranged at a position above the drive-up gutter 21, and a bottom wheel clamp 52, in particular a V-shaped wheel clamp, which is arranged at a position below the drive-up gutter 21. The front and bottom wheel clamps 51, 52 are configured for clamping the wheel of the bicycle in order to maintain the bicycle in the parked position.

As shown in figure 2A, the wheel catcher 50 comprises a main catcher portion 53, which is orientated substantially parallel to the mounting plate 31 when in the position shown in figure 2A, and an upper catcher portion 54 arranged at the upper edge of the main catcher portion 53 and extending in a direction away from the first support end 22 of the drive-up gutter 21, which upper catcher portion 54, at the edge facing away from the main catcher portion 53, has an upper abutting edge 55 extending downwards and substantially transverse to the upper catcher portion 54. Additionally, the wheel catcher 50 comprises a lower catcher portion 56 arranged at the lower edge of the main catcher portion 54 and extending oblique downwards away from the first support end 22 of the drive-up gutter 21, which lower catcher portion 56, at the edge facing away from the main catcher portion 53, has a lower abutting edge 57 extending substantially transverse to the lower catcher portion 56.

The front wheel clamp 51 is provided within the upper catcher portion 54, and the bottom wheel clamp 52 is provided within the lower catcher portion 56. The main catcher portion 53 has a wheel receiving opening 58 defined therein, in which the drive-up gutter 21 partially extends such that a wheel may be inserted into the wheel receiving opening 58 in an insert direction E. At the upper edge of the main catcher portion 53, the wheel receiving opening 58 merges into a first clamp opening 59 defined by the front wheel clamp 51. At the lower edge of the main catcher portion 53, the wheel receiving opening 58 merges into a second clamp opening 60 defined by the bottom wheel clamp 52. It is noted that the front wheel clamp 51 and the bottom wheel clamp 52 are defined by the edges of the first clamp opening 59 and the second clamp opening 60, respectively, which edges are shielded by means of shielding parts 61.

As shown in figure 2B, the main catcher portion 53, at the side edges thereof, is provided with a connector portion 65, which is substantially triangular shaped and extends substantially transverse to the main catcher portion 53 and towards the mounting plate 31, such that the main catcher portion 53 is at a distance from the mounting plate 31. Near the apex 66 of the triangular shaped connector portion 65, the triangular shaped connector portion 65 is clamped between one of the further mounting projections 35 and one of the clamping pieces 36, and arranged around the rotational busses provided therebetween. The connector portion 65 has a movement limiting groove 67, also referred to as a movement limiter, extending therethrough, through which the hooking part 38 of the respective clamping piece 36 projects. The dimensions of the movement limiting groove 67 and the hooking part 38 are chosen such that the wheel catcher 50 is enabled to rotate around the rotational axis A in a rotation direction R when a wheel is inserted into or removed from the wheel catcher 50, wherein the movement limiting groove 67 limits the rotational movement of the wheel catcher 50. As a result, the wheel catcher is prevented from rotating into a position in which a wheel may not be inserted into the wheel catcher 50.

As may be derived from figure 2B, the rotational axis A, the front wheel clamp 50 and the bottom wheel clamp 51 together define a triangular when seen from the side.

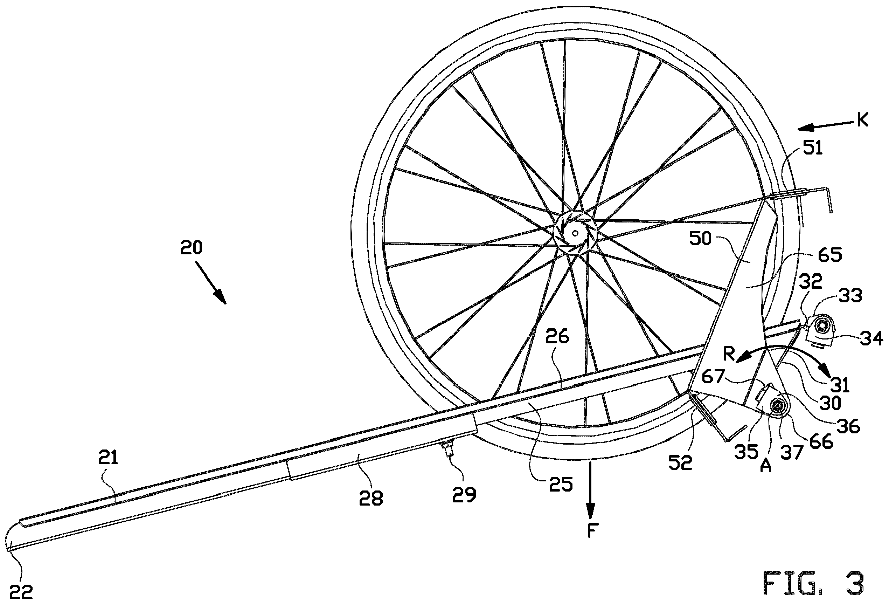

During use, a user may drive a bicycle up the drive-up gutter 21 until the front or rear wheel reaches the wheel parking opening 27 within the drive-up gutter 21. When the front side of the wheel is moved far enough beyond the end edge of the bottom wall 24, *i.e.* the back wheel clamp, the wheel will fall into the wheel parking opening 27 under influence of gravity. When moving into the wheel parking opening 27, the wheel will contact the front wheel clamp 51. As a result, the wheel catcher 50 may rotate clockwise in rotation direction R until the bottom wheel clamp 52 abuts against the wheel. When the wheel is in the position as shown in figure 3, the wheel is clamped between the front wheel clamp 51, the bottom wheel clamp 52 and the end edge of the bottom wall 24 of the drive-up gutter 21. It is emphasized, as clearly shown in figure 3, that the rotational axis A is located outside the outer circumference of the inserted wheel, when seen from aside. The wheel, thus, is clamped at three points and therefore a reliable bicycle parking spot is defined.

Although not shown, a resilient part, such as a spring, may be arranged in or at the wheel catcher 50 in order to force the wheel catcher 50 to return to the position as shown in figure 2B when a parked bicycle is removed from the bicycle parking support 20. Alternatively, the wheel catcher 50 may be forced to return to the position as shown in figure 2B by removing the front wheel from the wheel catcher 50. When a resilient part is provided or alternatively, during use, a user may drive a bicycle up the drive-up gutter 21 until the front or rear wheel reaches the wheel parking opening 27 within the drive-up gutter 21. When the front side of the wheel is moved far enough beyond the end edge of the bottom wall 24, the wheel will fall into the wheel parking opening 27 under influence of gravity. When moving into the wheel parking opening 27, the wheel will contact the bottom wheel clamp 52 in the downwards direction F. As a result, the wheel catcher 50 may rotate counter-clockwise in rotation direction R until the front wheel clamp 51 abuts against the wheel, thereby clamping the wheel is clamped the front wheel clamp 51, the bottom wheel clamp 52 and the end edge of the bottom wall 24 of the drive-up gutter 21, which is the back wheel clamp.

Due to the V-shape of the front wheel clamp 51, the bottom wheel clamp 52 and the end edge of the bottom wall 24 of the drive-up gutter 21, any width of bicycle wheel may be clamped. The smaller the width of the wheel, the further the wheel may be moved into the front wheel clamp 51, the bottom wheel clamp 52 and the end edge of the bottom wall 24 of the drive-up gutter 21, and *vice versa.*

Due to the wheel clamp 50 being enabled to move around the rotational axis A, the wheel catcher 50 may rotate further in the rotational direction R, in particular counter-clockwise, when a smaller wheel, in comparison with the wheel shown in figure 3, is inserted. This is caused by the wheel moving against the front wheel clamp 51 or alternatively against the bottom wheel clamp 52, thereby forcing the other one of the front wheel clamp 51 and the bottom wheel clamp 52 against the wheel to clamp it. Therefore, the bicycle parking support 20 is suitable for parking bicycles with different wheel diameters.

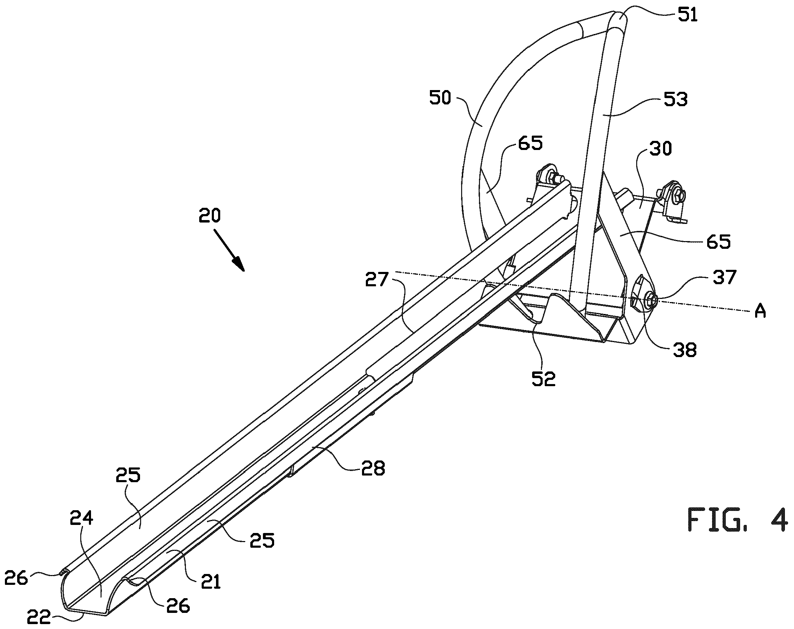

An alternative embodiment of the bicycle parking support 20 is shown in figure 4. The bicycle parking support 20 also comprises a drive-up gutter 21 similar to the drive-up gutter 20 of figures 1-3, such that may be refrained from reintroducing likewise or similar aspects. The embodiment of figure 4 differs from the embodiment shown in figures 1-3 in that the main catcher portion 53 is formed by two tubes running parallel to each other, which two tubes at the upper end thereof merge into a front wheel clamp 51. At the lower end, the two tubes are connected to a L-shaped plate of which the upstanding part comprises the bottom wheel clamp 52, wherein the L-shaped plate is connected to the connector portions 65.

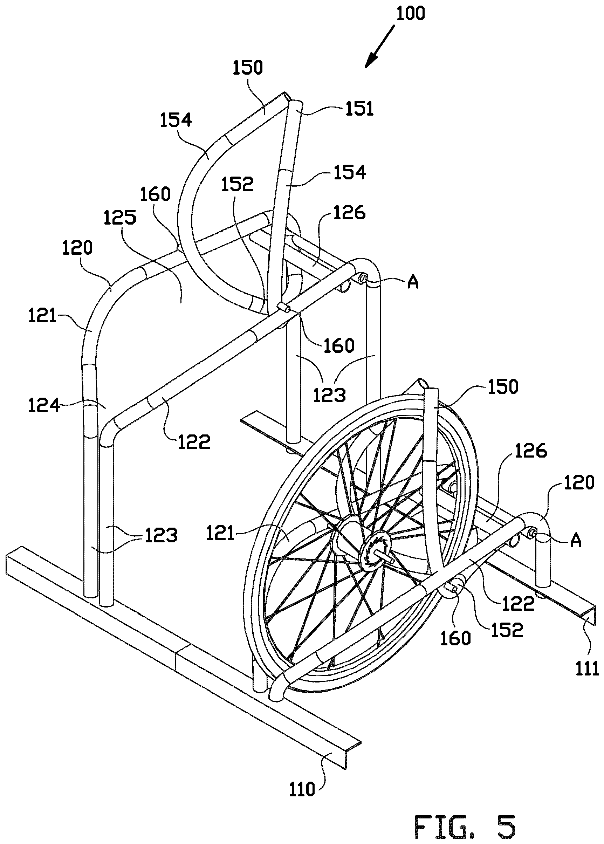

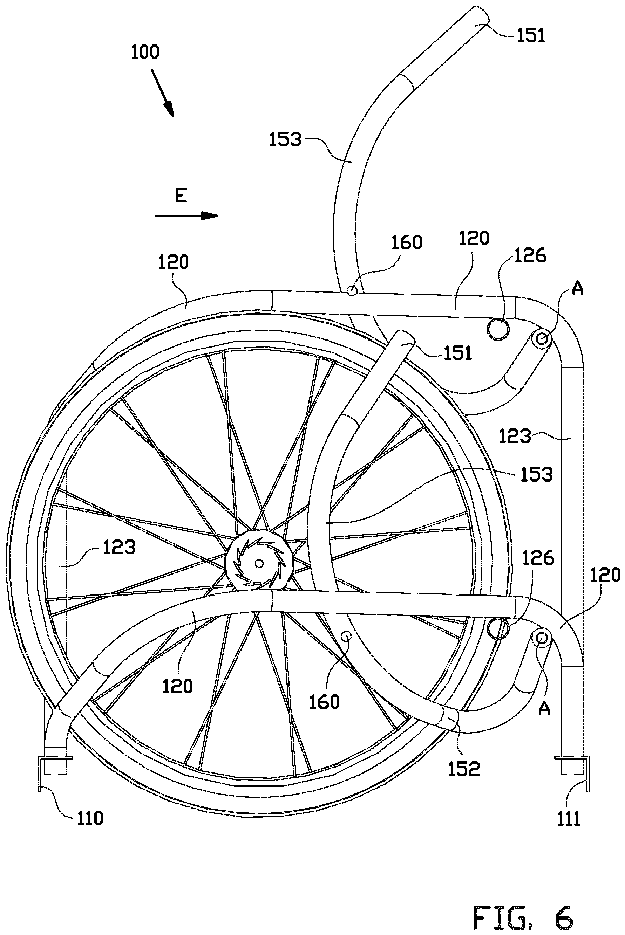

An alternative embodiment of the bicycle parking system 100 is shown in figure 5, of which a side view is shown in figure 6. The bicycle parking system 100 is also provided with a number of bicycle parking supports 120 that are arranged parallel to each other, and wherein each bicycle parking support 120 defines a bicycle parking spot configured for receiving a wheel in an insert direction E. As shown in figure 5, the bicycle parking supports 120 are arranged in a high-low configuration, which has to be understood as that the bicycle parking supports 120 are alternating between a low orientation, such as the left bicycle parking support 20 in figure 5, and a high orientation, such as the right bicycle parking support 120 in figure 5. The bicycle parking supports 120 are arranged at frame beams 110, 111 extending substantially transverse to the insert direction E.

As shown in figures 5 and 6, each of the bicycle parking supports 120 has a first supporting bar 121 and a second supporting bar 122 that are arranged parallel to each other and partially at a distance from each other. Each of the first supporting bar 121 and the second supporting bar 122 is substantially shaped as an inverse U, when seen from aside, wherein the first and second supporting bars 121, 122 of the bicycle parking support 120 in the high orientation are arranged at spacers 123 for placing the first and second supporting bars 121, 122 at a height with respect to the underground and the frame beams 110, 111 to which the first and second supporting bars 121, 122 are secured.

When seen in the insert direction E, the first and second supporting bars 121, 122 are placed initially against each other or very close to each other. Subsequently, the first and second supporting bars 121, 122 are running upwards and away from each other, thereby defining a V-shaped part 124 when seen in the insert direction E. The V-shaped part 124 defines a rear wheel clamp 124. Following on the V-shaped part 124, the first and second supporting bars 121, 122 run substantially parallel to and at a distance from each other, thereby defining a receiving opening 125 in which a wheel may be received. At the rear end of the receiving opening 125, when seen in the insertion direction E, an abutment rod 126 is arranged between the first and second supporting bars 121, 122 against which the inserted wheel may abut.

Each of the parking supports 120 has a wheel catcher 150, at the receiving opening 125, wherein the wheel catcher is configured for catching and holding a wheel. The wheel catcher 150 is arranged rotatably at the first and second supporting bars 121, 122, such that the wheel catcher is rotatable around a rotational axis A, which rotational axis A is located behind the abutment rod 126, when seen in the insertion direction E. Furthermore, as shown in figure 6, the rotational axis A is located outside the outer circumference of the inserted wheel, when seen from aside.

The wheel catcher 150 comprises a front wheel clamp 151, in particular a V-shaped front wheel clamp, which front wheel clamp 151 is arranged at a position above the first and second supporting bars 121, 122, and a bottom wheel clamp 152, in particular a V-shaped bottom wheel clamp 152, which is arranged at a position below the first and second supporting bars 121, 122. The front and bottom wheel clamps 151, 152 are configured for clamping the wheel of the bicycle in order to maintain the bicycle in the parked position.

Figure 6 clearly shows that the front wheel clamp 151, the bottom wheel clamp 152 and the rotational axis A together define a triangle, when seen from aside.

As shown in figure 5, the wheel catcher 150 further comprises a main catcher portion 153 that extends between the front wheel clamp 151 and the bottom wheel clamp 152 and into which a wheel may be caught. The wheel catcher 150 is manufactured from two catcher rods 154 that merge into the V-shaped front wheel clamp 151 at the upper end thereof, and into the V-shaped bottom wheel clamp 152 at the lower end thereof. As clearly shown in figure 6, the catcher rods 154 extend, in particular in a substantially V-shape, from the V-shaped bottom wheel clamp 152 towards the rotational axis A in order to arrange the wheel catcher 150 at the rotational axis A.

Each wheel catcher 150 is provided with a limiting projection 160, also called movement limiter, preferably with two limiting projections 160, which limiting projections 160 are arranged at the sides of outward facing side of the catcher rods 154. As shown in figure 5, the limiting projections 160 may be arranged at the catcher rods 154 at a level above the first and second supporting rods 121, 122, or at a level below the first and second supporting rods 121, 122. The limiting projections 160 are configured for limiting rotational movement of the wheel catcher 150 around the rotational axis A. In light thereof, it is noted that the abutment rod 126, optionally, may also be used for limiting rotational movement of the wheel catcher 150 around the rotational axis A.

The operation of the bicycle parking system 100 corresponds to the operation of the bicycle parking system 1 as shown in figure 1.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Bicycle parking system for enabling a user to park its bicycle, comprising a bicycle parking support that defines a bicycle parking spot, wherein the bicycle parking support comprises:
a wheel catcher configured for catching at least a part of the wheel inserted therein in an insert direction,
wherein the wheel catcher comprises a front wheel clamp for clamping the leading part of an inserted wheel, a bottom wheel clamp for clamping the bottom part of the inserted wheel, and a back wheel clamp for clamping a trailing part of the inserted wheel,
wherein the front wheel clamp and the bottom wheel clamp are rotatable about a horizontal rotational axis, which extends parallel to the wheel rotation axis of the inserted wheel, between a receiving position, in which a wheel may be inserted into the wheel catcher, and a parking position, in which the wheel is clamped between the front wheel clamp, the bottom wheel clamp and the back wheel clamp, and the back wheel clamp and the rotational axis are fixed, and
wherein the bottom wheel clamp, the back wheel clamp and the rotational axis are located at a level below the wheel rotation axis of the inserted wheel, and wherein the rotational axis is located outside the outer circumference of the inserted wheel when seen from aside.

2. Bicycle parking system according to claim 1, wherein the bicycle parking support comprises a drive gutter configured for receiving at least a wheel of a bicycle and having a first supporting end and a second supporting end, opposite to the first supporting end in the longitudinal direction of the drive gutter,
wherein the drive gutter has a wheel parking opening in the bottom wall thereof for receiving at least a part of the wheel, which wheel parking opening extends from the second supporting end towards the first supporting end and ends at an end edge of the bottom wall, which end edge defines the back wheel clamp, and
wherein the wheel catcher is arranged at the second supporting end and the bottom wheel clamp and the rotational axis are located below the drive gutter,
preferably wherein the bottom wheel clamp is located below the wheel parking opening,
preferably comprising a gutter adapter arranged releasable at the drive gutter, wherein the gutter adapter is moveable with respect to the drive gutter in order to adjust the dimensions of the wheel parking opening, preferably the dimension of the wheel parking opening in the longitudinal direction of the drive gutter.

3. Bicycle parking system according to claim 1 or 2, wherein the front wheel clamp and the bottom wheel clamp are fixed with respect to each other.

4. Bicycle parking system according to any one of claims 1-3, wherein the front wheel clamp, the bottom wheel clamp and the rotational axis together define a triangle, when seen from the side.

5. Bicycle parking system according to any one of the preceding claims, when dependent on claim 2, wherein the first support end is located at a first level and the second support end is located at a second level, wherein the second level is higher than the first level.

6. Bicycle parking system according to any one of the preceding claims, wherein the front wheel clamp, the bottom wheel clamp and/or the back wheel clamp are substantially V-shaped.

7. Bicycle parking system according to any one of the preceding claims, wherein the wheel catcher comprises a wheel receiving opening configured for receiving at least a part of the wheel and extending between the front wheel clamp and the bottom wheel clamp.

8. Bicycle parking system according to claims 2 and 7, wherein the drive gutter, at the second supporting end thereof, projects into the wheel catcher via the wheel receiving opening.

9. Bicycle parking system according to any one of the preceding claims, comprising a mount arranged at the wheel catcher and configured for mounting the bicycle parking support to another component of the bicycle parking system.

10. Bicycle parking system according to claims 2 and 9, wherein the mount is arranged at or near the second supporting end of the drive gutter and configured for mounting the bicycle parking support to another component of the bicycle parking system, preferably wherein the wheel catcher is arranged at the mount in such manner that the wheel catcher is rotatable about the rotational axis.

11. Bicycle parking system according to any one of the preceding claims, comprising a resilient part, such as a spring, arranged at or near the wheel catcher, wherein the resilient part is configured for moving the wheel catcher into the receiving position when the wheel is removed from the wheel catcher.

12. Bicycle parking system according to claims 10 and 11, wherein the resilient part is provided between the wheel catcher and the mount.

13. Bicycle parking system according to any one of the preceding claims, comprising a housing having a parking space defined therein in which the bicycle park support is arranged, wherein the housing has a door portion for providing access to the parking space, preferably wherein the housing has a lock for locking or opening the door portion to control access to the parking space within the housing.

14. Bicycle parking system according to claim 13, wherein a supporting beam is horizontally arranged within the housing, wherein the bicycle parking support, in particular the drive gutter at the second supporting end thereof is arranged at the supporting beam, preferably wherein the bicycle parking support is releasable arranged at the supporting beam such that the position of the bicycle parking support within the housing is adjustable, and/or
comprising two or more bicycle parking supports arranged next to each other and wherein a top supporting beam and a lower supporting beam are horizontally arranged within the housing, wherein one of the two or more bicycle parking supports is arranged at the top supporting beam, and the other one of the two or more bicycle parking supports is arranged at the lower supporting beam.

15. Bicycle parking system according to any one of the preceding claims, wherein the bicycle parking support is configured to be stacked onto another bicycle parking support, and/or
wherein the wheel catcher is configured to be moved from the receiving position into the parking position by a wheel being inserted into the wheel catcher in an insert direction substantially parallel to the longitudinal direction of the drive gutter, and/or
wherein the back wheel clamp and the rotational axis are fixed with respect to each other, and/or
comprising a movement limiter configured for limiting the rotational movement of the wheel catcher between the receiving position and the parking position.
